# EUROPEAN PATENT APPLICATION

(11) **EP 4 447 207 A1**
(43) Date of publication of application: **16.10.2024**
(21) Application number: 22926531.9
(22) Date of filing: 21.02.2022
(51) Int. Cl.: H01M 50/188, H01M 50/184, H01M 50/166, H01M 50/559

(54) **BATTERY CELL AND MANUFACTURING METHOD AND MANUFACTURING SYSTEM THEREFOR, BATTERY, AND ELECTRICAL DEVICE**

(71) Applicant: Contemporary Amperex Technology (Hong Kong) Limited, Central, Central And Western District (HK)
(72) Inventor: LUO, Zhixin, Ningde City, Fujian 352100 (CN); ZHU, Wenqi, Ningde City, Fujian 352100 (CN); LI, Zhen, Ningde City, Fujian 352100 (CN)
(74) Representative: Herrmann, Uwe
(86) International application number: PCT/CN2022/077143
(87) International publication number: WO 2023/155204

(57) **Abstract**

Embodiments of the present application provide a battery cell, a method and a system for manufacturing a battery cell, a battery, and an electrical apparatus. The battery cell of the embodiments of the present application includes a housing, an electrode component, an end cap, an electrode terminal, and an insulating component. The housing has an opening. The electrode component is accommodated within the housing. The end cap is configured to cover the opening. The electrode terminal is disposed on the end cap and electrically connected to the electrode component. The insulating component is configured to insulate and separate the end cap from the electrode terminal, and at least a part of the insulating component is located between the end cap and the electrode terminal and is attached to the end cap and the electrode terminal. A part of the insulating component located between the end cap and the electrode terminal not only can insulate and separate the electrode terminal from the end cap, but also can be attached to the end cap and the electrode terminal at the same time, so that the electrode terminal is installed on the end cap in an insulated manner, and a process for installing and forming the electrode terminal is simplified, thereby reducing a risk of damaging the insulating component, and improving safety.

## Description

### TECHNICAL FIELD

The present application relates to the technical field of batteries, and in particular, to a battery cell, a method and a system for manufacturing the battery cell, a battery, and an electrical apparatus.

### BACKGROUND

Battery cells are widely used in electronic equipment, such as a mobile phone, a notebook computer, a battery car, an electric vehicle, an electric plane, an electric ship, an electric toy car, an electric toy ship, an electric toy plane, and an electric tool, and the like. The battery cell may include a nickel-cadmium battery cell, a nickel-hydrogen battery cell, a lithium ion battery cell, a secondary alkaline zinc-manganese battery cell, and the like.

In the development of the battery technology, in addition to the performance improvement of a battery cell, the safety issue also cannot be ignored. Therefore, how to enhance the safety of the battery cell is an urgent technical problem to be solved in the battery technology.

### SUMMARY

The present application provides a battery cell, a method and a system for manufacturing a battery cell, a battery, and an electrical apparatus, which can enhance safety of the battery cell.

In a first aspect, embodiments of the present application provide a battery cell including a housing, an electrode component, an end cap, an electrode terminal, and an insulating component. The housing has an opening. The electrode component is accommodated within the housing. The end cap is configured to cover the opening. The electrode terminal is disposed on the end cap and electrically connected to the electrode component. The insulating component is configured to insulate and separate the end cap from the electrode terminal, and at least a part of the insulating component is located between the end cap and the electrode terminal and is attached to the end cap and the electrode terminal.

In the present application, a part of the insulating component located between the end cap and the electrode terminal not only can insulate and separate the electrode terminal from the end cap, but also can be attached to the end cap and the electrode terminal at the same time, so that the electrode terminal is installed on the end cap in an insulated manner, and a process for installing and forming the electrode terminal is simplified, thereby reducing a risk of damaging the insulating component, and improving safety.

In some implementations, the insulating component is tightly coupled with the end cap and the electrode terminal.

In the above implementations, a tightly coupled structure is formed between the insulating component and the end cap, and a tightly coupled structure is formed between the insulating component and the electrode terminal, so that insulation and sealing of the end cap and the electrode terminal are achieved, thereby improving safety and performance of the battery cell.

In some implementations, the insulating component is tightly coupled with the end cap and the electrode terminal through a thermo-compression composite process.

In the above implementations, the thermo-compression composite process is simple, so that a connection between the insulating component and the end cap and a connection between the insulating component and the electrode terminal are easily achieved, a risk of damaging the insulating component is reduced, and meanwhile, a coupling force at a composite interface between the insulating component and the end cap and a coupling force at a composite interface between the insulating component and the electrode terminal can be ensured, and a risk of separating the insulating component from the end cap and a risk of separating the insulating component from the electrode terminal are reduced under a condition that the electrode terminal is subjected to a force, so as to improve the safety of the battery cell.

In some implementations, the insulating component is tightly coupled with the end cap and the electrode terminal by a microscopic fitting structure.

In the above implementations, it is easy for the microscopic fitting structure to achieve an operation process for a tight connection, and meanwhile, a coupling force at a composite interface between the insulating component and the end cap and a coupling force at a composite interface between the insulating component and the electrode terminal can be ensured, and a risk of separating the insulating component from the end cap and a risk of separating the insulating component from the electrode terminal are reduced under a condition that the electrode terminal is subjected to a force, so as to improve the safety of the battery cell.

In some implementations, the end cap is provided with an electrode outlet hole. The electrode terminal includes a terminal main body and a first limit portion, at least a part of the terminal main body is located within the electrode outlet hole, and the first limit portion protrudes from an outer sidewall of the terminal main body and is located on a side of the end cap facing the electrode component The insulating component includes a first insulating portion located on a side of the end cap facing the electrode component, and at least a part of the first insulating portion is located between the end cap and the first limit portion and is attached to the end cap and the first limit portion, so as to seal the electrode outlet hole

In the above implementations, the first limit portion is arranged, so that the first limit portion can effectively function as limiting the electrode component. The first insulating portion insulates and separates the first limit portion from the end cap, and a buffering function of the first insulating portion can reduce a stress and an impact on the end cap and the electrode terminal in the vicinity of the region, and meanwhile, an insulating effect between the first limit portion and the end cap is improved, thereby improving the safety of the battery cell.

In some implementations, the insulating component further includes a second insulating portion, at least a part of the second insulating portion is located within the electrode outlet hole and is located between the terminal main body and the end cap, so as to insulate and separate the terminal main body from the end cap.

In the above implementations, the second insulating portion can further insulate and separate the terminal main body from the end cap, so as to reduce a risk of conducting the terminal main body and the end cap, and improve the safety.

In some implementations, the second insulating portion is attached to the terminal main body; and/or the second insulating portion is attached to the end cap.

In some implementations, the first insulating portion is connected to the second insulating portion.

In the above implementations, there may be no gap between the first insulating portion and the second insulating portion, so as to further ensure insulation and reduce the risk of conducting the end cap and the electrode terminal.

In some implementations, the second insulating portion extends beyond the end cap along a direction away from the electrode component.

In the above implementations, a creepage distance between the terminal main body and the end cap can be increased, and meanwhile, a risk of conducting the end cap and the terminal main body by external impurities is reduced, and the safety is improved.

In some implementations, the terminal main body extends beyond the second insulating portion along a direction away from the electrode component.

In the above implementations, the second insulating portion can be prevented from interfering with a connection between the terminal main body and other external components.

In some implementations, the electrode terminal further includes a second limit portion protruding from an outer sidewall of the terminal main body and located on a side of the end cap away from the electrode component. The insulating component further includes a third insulating portion arranged around the terminal main body and located between the second limit portion and the end cap, so as to further insulate and separate the second limit portion from the end cap.

Along a thickness direction of the end cap, the first limit portion and the second limit portion sandwich a part of the end cap from two sides. In the above implementations, a connection strength between the electrode terminal and the end cap can be increased by providing the second limit portion, so that stability is improved; the third insulating portion can insulate and separate the second limit portion from the end cap, so as to further reduce a risk of a short circuit.

In some implementations, the third insulating portion is attached to the end cap, so that a tightness of a connection surface between the third insulating portion and the end cap can be increased.

In some implementations, the third insulating portion is connected to the second insulating portion, so that there is no gap between the third insulating portion and the second insulating portion, so as to ensure insulation and reduce a risk of conducting the end cap and the electrode terminal.

In some implementations, the first insulating portion extends beyond the first limit portion along a direction away from the terminal main body to separate at least a part of the end cap from the electrode component.

In the above implementations, the first insulating portion can separate at least a part of the end cap from the electrode component, so as to reduce the possibility of contacting the electrode component to the end cap under a condition that the battery cell vibrates, reduce the risk of the short circuit, and improve the safety.

In some implementations, the end cap includes a cap body, a first protruding portion surrounding an outer side of the cap body, and an extending portion surrounding an outer side of the first protruding portion, and the first protruding portion protrudes from a surface of the cap body facing the electrode component and a surface of the extending portion facing the electrode component. The extending portion is configured to be laser welded with the housing, and at least a part of the first protruding portion extends into the housing and is configured to block laser for welding when the extending portion and the housing are being welded.

In the above implementations, the first protruding portion protrudes from the surface of the extending portion facing the electrode component, and therefore, under a condition that the laser enters the housing from a gap at a position where the extending portion is abutted against the housing, the first protruding portion can block the laser, so that a risk of burning of other components by the laser is reduced.

In some implementations, the insulating component at least partially covers a top end surface of the first protruding portion, so as to insulate and separate the first protruding portion from the electrode component.

In the above implementations, the insulating component is allowed to at least partially cover the top end face of the first protruding portion, so as to reduce a risk of contacting the electrode component to the first protruding portion under a condition that the battery cell vibrates, and improve the safety.

In some implementations, the insulating component includes a first insulating portion located on a side of the end cap facing the electrode component. The first insulating portion includes a first portion, a second portion, and a third portion, and the first portion is attached to the cap body, at least a part of the first portion is located between the cap body and the electrode terminal, the third portion is attached to the top end surface of the first protruding portion, and the second portion is connected between the first portion and the third portion and is attached to a side surface of the first protruding portion close to the cap body.

In the above implementations, a shape of the end cap and a shape of the first insulating portion can be ensured to correspond to each other in a region where the end cap contacts the first insulating portion, so as to improve a separation and insulation effect of the first insulating portion in the region as much as possible, thereby further reducing a risk of contacting the end cap to the electrode component.

In some implementations, the end cap is formed with a first recess at a position corresponding to the first protruding portion, and the first recess is recessed relative to a surface of the cap body away from the electrode component.

Welding stress is generated when the extending portion is welded to the housing, and is transmitted to the protruding portion. In the above implementations, the first recess is formed on a side of the first protruding portion away from the electrode component, so as to reduce a strength of the first protruding portion, so that the first protruding portion can release the welding stress by deforming during the welding process, thereby reducing a risk of deformation and cracking of a welded region, and improving a sealing and performance.

In some implementations, the electrode component includes a main body portion and a first electrode tab led out from an end of the main body portion facing the end cap. The electrode terminal is provided with a second recess recessed from a surface of the electrode terminal away from the electrode component. The electrode terminal is formed with a connecting portion at a bottom of the second recess, and the connecting portion is configured to be welded to the first electrode tab to form a first welded portion.

In the above implementations, the connecting portion may be welded to the first electrode tab from the outside, so that a risk of metal particles generated by welding splashing into the housing may be reduced, and the safety may be improved. In the embodiment, a thickness of the connecting portion is reduced by providing the second recess, so that welding power required to weld the connecting portion to the first electrode tab can be reduced, thereby reducing heat generation and a risk of burning the insulating component.

In some implementations, the connecting portion is provided with a first via configured to connect the second recess to an inner space of the housing. The battery cell further includes a sealing plate, and at least a part of the sealing plate is accommodated within the second recess and is connected to the electrode terminal, so as to seal the first via.

In the above implementations, the first via may have a function of releasing the welding stress under a condition that the connecting portion is welded to the first electrode tab, thereby reducing a risk of bursting of the connecting portion. The first via may further be used in a liquid injection process, and after the liquid injection is completed, the sealing plate can seal the first via, so as to reduce a risk of electrolyte leakage.

In some implementations, the electrode component is a winding structure and includes a second via at a winding center of the winding structure, and the second via penetrates the first electrode tab and the main body portion along an axial direction of the electrode component. The first via and the second via are oppositely arranged along the axial direction.

In the above implementations, in the liquid injection process, the electrolyte can flow into the second via through the first via, and the electrolyte flowing into the second via can wet the electrode component from inside, so as to improve efficiency of wetting the electrode component.

In some implementations, the electrode terminal includes a second protruding portion arranged around the first via and protruding from a surface of the connecting portion facing the first electrode tab. At least a part of the second protruding portion extends into the second via.

In the above implementations, the part of the second protruding portion extending into the second via can support the first electrode tab, so as to reduce deformation of the first electrode tab toward the second via, thereby reducing a risk of inserting the first electrode tab into the main body portion via the second via, and improving the safety. The second protruding portion can also separate the first electrode tab from the electrolyte in the injection process, thereby reducing a risk of impacting the first electrode tab by the electrolyte, and reducing deformation of the first electrode tab.

In some implementations, the first electrode tab is wound around a winding axis of the electrode component and includes a plurality of electrode tab layers. At least a part of the plurality of electrode tab layers are welded to form a second welded portion. Along the thickness direction of the end cap, at least a part of the second welded portion does not overlap with the connecting portion.

In the above implementations, some of the electrode tab layers directly welded to the connecting portion cannot be connected to each other by the second welded portion, so that a conducting path between the electrode tab layers and a conducting path between the electrode tab layer and the connecting portion can be shortened, resistance of the electrode component is reduced, a uniformity of a current density is improved, a risk of polarization of an electrode plate is reduced, and a conveyance capacity and charging efficiency of the battery cell are improved.

In some implementations, the second welded portion is connected to the first welded portion.

In the above implementations, the first welded portion is directly connected to the second welded portion, so that currents collected by the second welded portion can directly flow into the first welded portion, thereby further shortening a conducting path between the first welded portion and the second welded portion, reducing the resistance, and improving the conveyance capacity and the charging efficiency of the battery cell.

In some implementations, the second welded portion extends along a radial direction of the electrode component, and the radial direction is perpendicular to the winding axis of the electrode component.

In the above implementations, the second welded portion extending along the radial direction may be connected to more electrode tab layers, so as to reduce a difference in conducting paths between the electrode tab layers.

In some implementations, there are a plurality of second welded portions, and the plurality of second welded portions are spaced apart along a circumferential direction of the electrode component.

In the above implementations, the plurality of second welded portions may increase a conveyance area, thereby improving the conveyance capacity and the charging efficiency of the battery cell.

In some implementations, the insulating component has a thickness ranging from 0.05mm to 1.5mm.

In the above implementations, the insulating component may have a less thickness, so that a space occupied by the insulating component may be reduced and an energy density of the battery cells may be increased.

In a second aspect, embodiments of the present application provide a battery including a plurality of battery cells according to any of the implementations of the first aspect.

In a third aspect, embodiments of the present application provide an electrical apparatus including the battery cell according to any of the implementations of the first aspect, and the battery cell is configured to provide electrical power.

In a fourth aspect, embodiments of the present application provide a method for manufacturing a battery cell, and the method includes: providing a housing having an opening; providing an electrode component and installing the electrode component within the housing; providing an end cap, an electrode component, and an insulating component, wherein the electrode terminal is disposed on the end cap, the insulating component insulates and separates the end cap from the electrode terminal, and at least a part of the insulating component is located between the end cap and the electrode terminal and is attached to the end cap and the electrode terminal; and covering the opening with the end cap, and electrically connecting the electrode terminal to the electrode component.

In a fifth aspect, embodiments of the present application provide a system for manufacturing a battery cell, and the system includes a first providing apparatus, a second providing apparatus, a third providing apparatus, and an assembling apparatus. The first providing apparatus is configured to provide a housing having an opening. The second providing apparatus is configured to provide an electrode component and install the electrode component within the housing. The third providing apparatus is configured to provide an end cap, an electrode component, and an insulating component, the electrode terminal is disposed on the end cap, the insulating component insulates and separates the end cap from the electrode terminal, and at least a part of the insulating component is located between the end cap and the electrode terminal and is attached to the end cap and the electrode terminal. The assembling apparatus is configured to cover the opening with the end cap and electrically connect the electrode terminal to the electrode component.

### BRIEF DESCRIPTION OF THE DRAWINGS

The drawings necessary for explaining embodiments are described briefly below to illustrate the technical solutions of the embodiments of the present application more clearly. Obviously, the drawings described below illustrate merely some embodiments of the present application. Other figures can be obtained by those with ordinary skill in the art from those drawings without any inventive efforts.
Fig. 1 is a schematic structural view of a vehicle according to some embodiments of the present application.
Fig. 2 is an exploded schematic view of a battery according to some embodiments of the present application.
Fig. 3 is an exploded schematic view of a battery module shown in Fig. 2.
Fig. 4 is an exploded schematic view of a battery cell according to some embodiments of the present application.

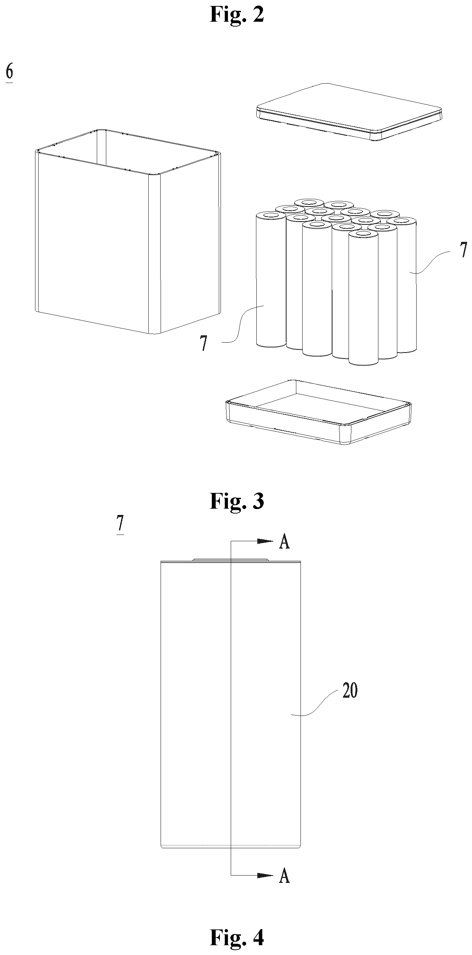

Fig. 4 is a front schematic view of a battery cell according to some embodiments of the present application.

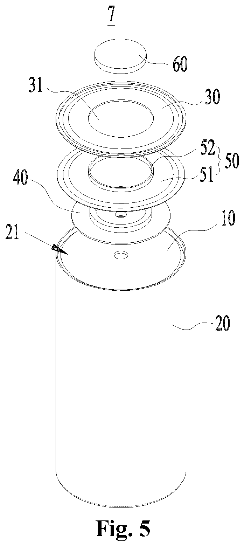

Fig. 5 is an exploded schematic view of the battery cell shown in Fig. 4.

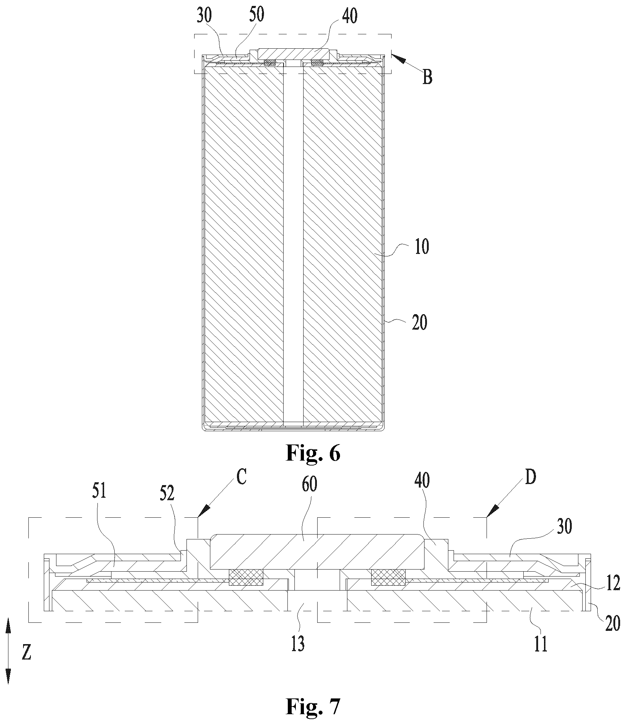

Fig. 6 is a schematic cross-sectional view of the battery cell shown in Fig. 4 along a direction A-A.
Fig. 7 is an enlarged schematic view of the portion of the battery cell at a block B shown in Fig. 6.

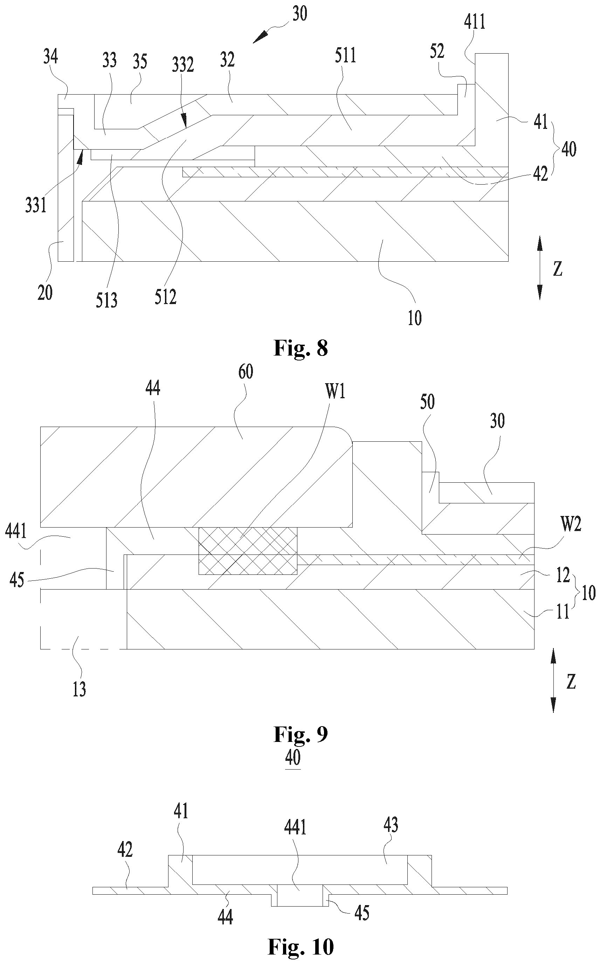

Fig. 8 is an enlarged schematic view of the portion at a block C shown in Fig. 7.
Fig. 9 is an enlarged schematic view of the portion of the battery cell at a block D shown in Fig. 7.
Fig. 10 is a schematic cross-sectional view of an electrode terminal of a battery cell according to some embodiments of the present application.
Fig. 11 is a schematic structural view of an electrode terminal according to some embodiments of the present application.
Fig. 12 is a top view of an electrode component according to some embodiments of the present application.
Fig. 13 is a partial cross-sectional schematic view of a battery cell according to some other embodiments of the present application.
Fig. 14 is an enlarged schematic view of a portion of the battery cell at a circle E shown in Fig. 13.
Fig. 15 is a schematic flowchart of a method for manufacturing a battery cell according to some embodiments of the present application.
Fig. 16 is a schematic block diagram of a system for manufacturing a battery cell according to some embodiments of the present application.

In the drawings, the drawings are not drawn according to actual scale.

### DETAILED DESCRIPTION

In order to make the objects, technical solutions and advantages of the embodiments of the present application more clear, the technical solutions in the embodiments of the present application will be described clearly and completely in conjunction with the drawings in the embodiments of the present application. Obviously, the described embodiments are a part of the embodiments of the present application, but not all of the embodiments. Based on the embodiments in the present application, all other embodiments obtained by those ordinary skilled in the art without any creative work shall fall within the protection scope of the present application.

Unless otherwise defined, all technical and scientific terms used herein have the same meanings as commonly understood by those skilled in the technical field of the present application. Herein, the terms used in the description of the present application are only for purposes of description of specific embodiments, and are not intended to limit the present application. The terms "comprising" and "having" in the description and claims of the present application and the above brief description of the drawings and any variations thereof are intended to cover non-exclusive inclusions. The terms "first", "second" and the like in the description and claims or the above brief description of the drawings of the present application are used to distinguish different objects, rather than to describe a specific order or primary and secondary relationship.

In the description of the present application, it is to be understood that terms "center", "lateral", "length", "width", "upper", "lower", "front", "back", "left", "right", "vertical", "horizontal", "top", "bottom", "inner", "outer", "axial", "radial", "circumferential", and the like indicate orientations or positional relationships based on the orientations or the positional relationships shown in the drawings, which are merely to facilitate and simplify the description of the present application, rather than to indicate or imply that the referenced apparatuses or elements must have a particular orientation, or be constructed and operated in a particular orientation. Accordingly, no limitations are intended to the present application.

In the description of the present application, it should be noted that, unless otherwise expressly specified and limited, the terms "installed", "connected", "connection" and "attached" should be understood in abroad sense, for example, they may refer to a fixed connection, a detachable connection or an integral connection, which may be a direct connection, an indirect connection via an intermediate medium, or an internal communication between two elements. For those of ordinary skill in the art, the specific meanings of the above-mentioned terms in the present application can be understood in accordance with specific conditions.

"An embodiment" mentioned in the present application means that a particular feature, structure or characteristic described in combination with an embodiment may be included in at least one embodiment of the present application. Appearances of the phrase in various places in the description are not necessarily all referring to the same embodiment, nor a separate or alternative embodiment that is mutually exclusive of other embodiments. It is explicitly and implicitly understood by those skilled in the art that the embodiments described herein may be combined with other embodiments.

The term "and/or" used herein refers to only an association relationship for describing associated objects, which includes three possible kinds of relationships. For example, "A and/or B" may represent three possible cases including "A existing alone", "A and B existing simultaneously", and "B existing alone". In addition, the character "/" herein generally represents that there is an "or" relationship between the associated objects preceding and succeeding the character "/" respectively.

In this application, "multiple" refers to two or more (including two), similarly, "multiple groups" refers to two or more groups (including two groups), and "multiple sheets" refers to two or more sheets (including two sheets).

A battery mentioned in the embodiments of the present application refers to a single physical module including one or more battery cells to provide a higher voltage and a higher capacity. For example, the battery mentioned in the present application may include a battery module, a battery pack, or the like. A battery typically includes a box body for enclosing one or more battery cells. The box body can prevent liquids or other foreign objects from affecting the charging or discharging of the battery cells.

In the present application, a battery cell may include a lithium ion secondary battery cell, a lithium ion primary battery cell, a lithium sulfur battery cell, a sodium lithium ion battery cell, a sodium ion battery cell, a magnesium ion battery cell, or the like, which is not limited in the embodiments of the present application. The battery cell may be in the shape of a cylinder, a flat body, a cuboid, or other shapes, which is not limited in the embodiments of the present application. Battery cells are generally categorized into three types depending on their packaging manners, including cylindrical battery cells, rectangular battery cells, and pouch battery cells, which are not limited in the embodiments of the present application.

A battery cell includes an electrode component and electrolyte, and the electrode component includes a positive electrode plate, a negative electrode plate and a separator. The operation of the battery cell mainly relies on a movement of metal ions between the positive electrode plate and the negative electrode plate. The positive electrode plate includes a positive electrode current collector and a positive electrode active material layer, and the positive electrode active material layer is coated on a surface of the positive electrode current collector; the positive electrode current collector includes a positive electrode current collecting portion coated with the positive electrode active material layer and a positive electrode tab not coated with the positive electrode active material layer. Taking a lithium ion battery as an example, a material of the positive electrode current collector may be aluminum, the positive electrode active material layer includes a positive electrode active material. The positive electrode active material may be lithium cobalt oxide, lithium iron phosphate, ternary lithium or lithium manganate, or the like. The negative electrode plate includes a negative electrode current collector and a negative electrode active material layer, and the negative electrode active material layer is coated on a surface of the negative electrode current collector; the negative electrode current collector includes a negative electrode current collecting portion coated with the negative electrode active material layer and a negative electrode tab not coated with the negative electrode active material layer. A material of the negative electrode current collector may be copper, the negative electrode active material layer includes a negative electrode active material, and the negative electrode active material may be carbon or silicon, and the like. A material of the separator may be PP (polypropylene), PE (polyethylene), or the like.

The battery cell further includes an external housing, and the electrode component and the electrolyte are accommodated within the external housing. The external housing may protect the electrode component from an external package to prevent liquids or other foreign objects from affecting the charging or discharging of the electrode component.

The external housing includes a housing and an end cap connected to the housing, and the housing and the end cap form an accommodating cavity to accommodate the electrode component and the electrolyte. An electrode terminal is often installed on the end cap, and the end cap is configured to be electrically connected to the electrode component, so as to lead out electrical power generated by the electrode component.

In order to reduce a risk of a short circuit, the electrode terminal needs to be insulated and separated from the end cap. An insulating component is often provided on the end cap, and at least a part of the insulating component is located between the electrode terminal and the end cap, so as to insulate and separate the electrode terminal from the end cap.

In the related art, when the end cap and the electrode terminal are assembled, first the electrode terminal is often inserted into an electrode outlet hole of the end cap from one side of the end cap, so that an outer end of the electrode terminal is protruded to the other end of the end cap, and then a limiting structure is formed by pressing the outer end of the electrode terminal to fix the electrode terminal to the end cap. This process for installing the electrode terminal is complicated. In addition, in a process for pressing the electrode terminal, the electrode terminal may press the insulating component, which causes a risk of the insulating component being pressed by the electrode terminal, so that insulation of the insulating component fails, thereby causing a potential risk.

In view of this, the embodiments of the present application provide a technical solution, in which the electrode terminal and the end cap are connected by the insulating component, and meanwhile insulation and fixation between the electrode terminal and the end cap are achieved, so as to simplify a process for forming the battery cell, and reduce a risk of damaging the insulation component, thereby improving safety.

The technical solution described in the embodiments of the present application are applicable to a battery and an electrical apparatus using a battery.

The electrical apparatus may be a vehicle, a mobile phone, a portable device, a notebook computer, a ship, a spacecraft, an electric toy, an electric tool, and the like. The vehicle may be a fuel vehicle, a gas vehicle or a new energy vehicle, and the new energy vehicle may be a pure electric vehicle, a hybrid vehicle or an extended-range vehicle, etc.; the spacecraft includes an airplane, a rocket, a space shuttle, a spacecraft, etc.; the electric toy includes a fixed or movable electric toy, such as a game console, an electric vehicle toy, an electric ship toy and an electric plane toy, etc.; the electric tool includes a metal-cutting electric tool, a grinding electric tool, an assembling electric tool and a railway electric tool, such as, an electric drill, an electric grinder, an electric wrench, an electric screwdriver, an electric hammer, an electric impact drill, a concrete vibrator and an electric planer, and the like. There is no special limitation on the above electrical apparatus in the embodiments of the present application.

In the following embodiments, for the convenience of description, the electrical apparatus is taken as a vehicle for illustration.

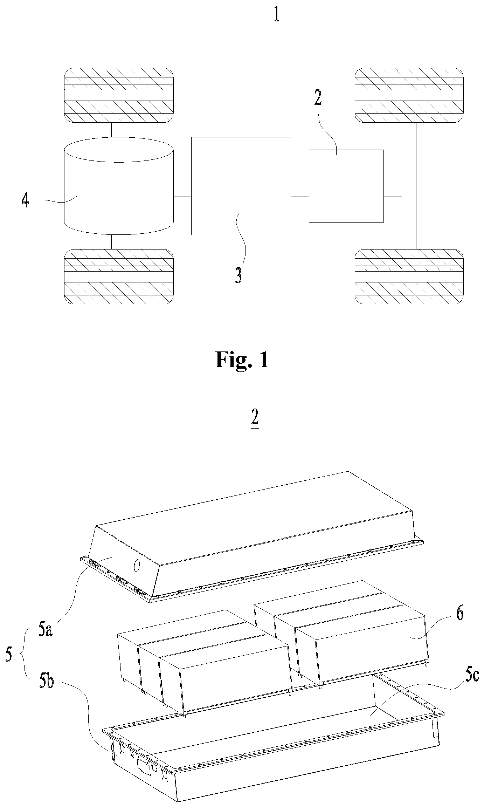

Fig. 1 is a schematic structural view of a vehicle according to some embodiments of the present application. As shown in Fig. 1, a battery 2 is arranged inside a vehicle 1. The battery 2 may be arranged at the bottom or the head or the rear of the vehicle 1. The battery 2 may be used for supplying power to the vehicle 1, for example, the battery 2 may be used as a manipulating power source of the vehicle 1.

The vehicle 1 may further include a controller 3 and a motor 4. The controller 3 is configured to control the battery 2 to supply power to the motor 4, for example, for satisfying work power demands in the starting, navigating, and driving of the vehicle 1.

In some embodiments of the present application, the battery 2 may not only be used as the manipulating power source of the vehicle 1, but may also be used as a driving power source of the vehicle 1 to provide driving power for the vehicle 1 instead of or partially instead of fuel or natural gas.

Fig. 2 is an exploded schematic view of a battery according to some embodiments of the present application. As shown in Fig. 2, the battery 2 includes a box body 5 and a battery cell (not shown in Fig. 2), and the battery cell is accommodated within the box body 5.

The box body 5 is used for accommodating the battery cell, and the box body 5 may be of various structures. In some embodiments, the box body 5 may include a first box body portion 5a and a second box body portion 5b. The first box body portion 5a and the second box body portion 5b can be covered by each other. The first box body portion 5a and the second box body portion 5b together define an accommodating space 5c for accommodating the battery cell. The second box body portion 5b may be a hollow structure with one open side. The first box body portion 5a is a plate-shaped structure. The first box body portion 5a covers the open side of the second box body portion 5b, so that the box body 5 having the accommodating space 5c is formed. Each of the first box body portion 5a and the second box body portion 5b may be a hollow structure with one open side, and the opening side of the first box body portion 5a covers the opening side of the second box body portion 5b, so that the box body 5 having the accommodating space 5c is formed. Of course, the first box body portion 5a and the second box body portion 5b may be in various shapes, such as a cylinder, a cuboid, and the like.

In order to improve a tightness after the first box body portion 5a and the second box body portion 5b are connected, a sealing component, such as sealant, a sealing ring, and the like, may be provided between the first box body portion 5a and the second box body portion 5b.

Assuming that the first box body portion 5a covers the top of the second box body portion 5b, the first box body portion 5a may be referred to as an upper box cover plate, and the second box body portion 5b may be referred to as a lower box body.

In the battery 2, there may be one such battery cell or a plurality of such battery cells. Under a condition that there are a plurality of such battery cells, the plurality of battery cells may be connected in series or in parallel or in a parallel-series connection. A parallel-series connection means that the connections between the plurality of battery cells include a series connection and a parallel connection. The plurality of battery cells may be directly connected in series or in parallel or in a parallel-series connection, and then a whole composed of the plurality of battery cells is accommodated within the box body 5; of course, the plurality of battery cells may be connected in series or in parallel or in a parallel-series connection to form a battery module 6, and a plurality of battery modules 6 are connected in series or in parallel or in a parallel-series connection to form a whole and are accommodated within the box body 5.

Fig. 3 is an exploded schematic view of the battery module shown in Fig. 2.

In some embodiments, as shown in Fig. 3, there are a plurality of battery cells 7, and the plurality of battery cells 7 are first connected in series or in parallel or in a parallel-series connection to form a battery module 6. A plurality of battery modules 6 are then connected in series or in parallel or in a parallel-series connection to form a whole, and the whole is accommodated within the box body.

A plurality of battery cells 7 in the battery module 6 may be electrically connected to each other by a bus component, so that the plurality of battery cells 7 in the battery module 6 are connected in series or in parallel or in a parallel-series connection. There may be one or more bus components, each of the bus components is configured to electrically connect at least two battery cells.

Fig. 4 is a front schematic view of a battery cell according to some embodiments of the present application; Fig. 5 is an exploded schematic view of the battery cell shown in Fig. 4; Fig. 6 is a schematic cross-sectional view of the battery cell shown in Fig. 4 along a direction A-A; Fig. 7 is an enlarged schematic view of the portion of the battery cell at a block B shown in Fig. 6; Fig. 8 is an enlarged schematic view of the portion at a block C shown in Fig. 7.

As shown in Fig. 4 to Fig. 7, the battery cell 7 according to the embodiments of the present application includes an electrode component 10, a housing 20, an end cap 30, an electrode terminal 40, and an insulating component 50. The housing 20 has an opening 21. The electrode component 10 is accommodated within the housing 20. The end cap 30 is configured to cover the opening 21. The electrode terminal 40 is disposed on the end cap 30 and electrically connected to the electrode component 10. The insulating component 50 is configured to insulate and separate the end cap 30 from the electrode terminal 40, and at least a part of the insulating component 50 is located between the end cap 30 and the electrode terminal 40 and is attached to the end cap 30 and the electrode terminal 40.

The electrode component 10 is a core component for the battery cell 7 to achieve a charging and discharging function, and includes a first electrode plate, a second electrode plate and a separator configured to separate the first electrode plate from the second electrode plate. Polarities of the first electrode plate and the second electrode plate are opposite. In other words, one of the first electrode plate and the second electrode plate is a positive electrode plate, and the other one of the first electrode plate and the second electrode plate is a negative electrode plate.

In an example, the first electrode plate, the second electrode plate, and the separator are all strip-shaped structures, and the first electrode plate, the second electrode plate, and the separator are wound together around a winding axis to form a winding structure. The winding structure may be a cylindrical structure, a flat structure, or a structure of other shapes.

There may one or more electrode components 10. In an example, as shown, there is one electrode component 10.

The housing 20 is a hollow structure, and a space for accommodating the electrode component 10 is formed within the housing 20. A shape of the housing 20 may be determined according to a specific shape of the electrode component 10. For example, under a condition that the electrode component 10 is a cylindrical structure, the housing may be selected to be a cylindrical housing; under a condition that the electrode component 10 is a cuboid structure, the housing may be selected to be a cuboid housing. Optionally, the electrode component 10 and the housing 20 are cylindrical structures.

Materials of the housing 20 may be various, such as, copper, iron, aluminum, stainless steel, aluminum alloy, plastic, and the like, which is not limited by the embodiments of the present application.

The housing 20 has the opening 21, the end cap 30 covers the opening 21, and a sealed connection is formed at a position where the opening 21 contacts the end cap 30, so as facilitate forming of a sealed space for accommodating the electrode component 10 and the electrolyte.

The housing 20 may be a structure with an opening on one side, and one end cap 30 is provided to cover the opening of the housing 20. Alternatively, the housing 20 may be a structure with openings on two sides, and two end caps 30 are provided to respectively cover the two openings of the housing 20. In an example, the end cap 30 is connected to the housing 20 by welding, bonding, snapping or other manners.

A shape of the end cap 30 may be adapted to a shape of the housing 20, so as to fit the housing 20. Optionally, the end cap 30 may be made of a material having a certain hardness and strength (such as aluminum alloy), so that the end cap 30 is less likely to deform when impacted by compression, thereby allowing the battery cell 7 to be more strong in structure, and improving the safety and the performance. Materials of the end cap 30 may also be various, such as, copper, iron, aluminum, stainless steel, aluminum alloy, plastic, and the like, which is not limited by the embodiments of the present application.

The electrode terminal 40 is electrically connected to the electrode component 10, and is configured to lead out electric power of the electrode component 10. In an example, the electrode terminal 40 may be electrically connected to an electrode tab of the electrode component 10. Electrically connecting the electrode terminal 40 to the electrode tab of the electrode component 10 means that the electrode terminal 40 and the electrode tab are at a connected state in which electric charges can move between the electrode terminal 40 and the electrode tab.

The electrode terminal 40 may be directly connected to the electrode tab. For example, the electrode terminal 40 is abutted against or welded to the tab. The electrode terminal 40 may also be indirectly connected to the electrode tab. For example, the electrode terminal 40 may be connected to the electrode tab by a current collecting component or a conductive adhesive.

The electrode terminal 40 is an output electrode of the battery cell 7, and is configured to be electrically connected to the bus component of the battery; and at least a part of the electrode terminal 40 is exposed to facilitate connection with the bus component. In an example, the electrode terminal 40 may protrude from an outer surface of the end cap 30.

Materials of the insulating component 50 may be various, such as, rubber, plastic, and the like.

Insulating and separating the two means that electrical equipments are insulated and separated from each other, and the electric charges cannot substantially move between the electrical equipments. The insulating component 50 can block a transmission of the electric charges between the end cap 30 and the electrode terminal 40, thereby insulating and separating the end cap 30 and the electrode terminal 40 from each other.

Attaching means attaching and connecting; under a condition that one component is attached to the other component, so that, at least in part at an interface where the two components contact, the two components are at a connected state, and fixation and connection are achieved between the two components without using other structures. In an example, one component may be bonded, coated or otherwise attached to the other component.

The insulating component 50 may be located entirely between the end cap 30 and the electrode terminal 40, or may be located only partially between the end cap 30 and the electrode terminal 40, which is not limited by the embodiments of the present application.

In the embodiments of the present application, a part of the insulating component 50 located between the end cap 30 and the electrode terminal 40 not only can insulate and separate the electrode terminal 40 from the end cap 30, but also can be attached to the end cap 30 and the electrode terminal 40 at the same time, so that the electrode terminal 40 is installed on the end cap 30 in an insulated manner, and a process for installing and forming the electrode terminal 40 is simplified, thereby reducing a risk of damaging the insulating component 50, and improving the safety.

In some embodiments, the insulating component 50 is tightly coupled with the end cap 30 and the electrode terminal 40.

In the embodiments, a tightly coupled structure is formed between the insulating component 50 and the end cap 30, and a tightly coupled structure is formed between the insulating component 50 and the electrode terminal 40, so that insulation and sealing of the end cap 30 and the electrode terminal 40 are achieved, thereby improving safety and performance of the battery cell.

In some embodiments, the insulating component 50 is bonded to the end cap 30 and the electrode terminal 40, so that the insulating component 50 is tightly coupled with the end cap 30, and the insulating component 50 tightly coupled with the electrode terminal 40.

In the embodiment, a bonding process is simple, so that a connection between the insulating component 50 and the end cap 30 and a connection between the insulating component 50 and the electrode terminal 40 are easily achieved, and the risk of damaging the insulating component 50 is reduced.

In some embodiments, the insulating component 50 is tightly coupled with the end cap 30 and the electrode terminal 40 through a thermo-compression composite process.

In an example, surfaces of the end cap 30 and the electrode terminal 40 may be subjected to a pretreatment such as passivation, and a denatured insulating material, along with a groove on a microscopic scale of the end cap 30 and a groove on a microscopic scale of the electrode terminal 40, forms a mechanical interlock under the thermo-compression composite process. Meanwhile, a hydrogen bond is formed between the insulating material and a passivation film on a surface of the end cap 30, so that the insulating material is tightly coupled with the end cap 30, and a hydrogen bond is formed between the insulating material and a passivation film on a surface of the electrode terminal 40, so that the insulating material is tightly coupled with the end cap 30. An insulating material is subjected to the thermo-compression composite process to form the insulating component 50.

In the embodiment, the thermo-compression composite process is simple, so that the connection between the insulating component 50 and the end cap 30 and the connection between the insulating component 50 and the electrode terminal 40 are easily achieved, the risk of damaging the insulating component 50 is reduced, and meanwhile, a coupling force at a composite interface between the insulating component 50 and the end cap 30 and a coupling force at a composite interface between the insulating component 50 and the electrode terminal 40 can be ensured, and a risk of separating the insulating component 50 from the end cap 30 and a risk of separating the insulating component 50 from the electrode terminal 40 are reduced under a condition that the electrode terminal 40 is subjected to a force, so as to improve the safety of the battery cell 7.

In some embodiments, the insulating component 50 is tightly coupled with the end cap and the electrode terminal by a microscopic fitting structure.

It is easy for the microscopic fitting structure to achieve an operation process for a tight connection, and meanwhile, the coupling force at the composite interface between the insulating component 50 and the end cap 30 and the coupling force at the composite interface between the insulating component 50 and the electrode terminal 40 can be ensured, and the risk of separating the insulating component 50 from the end cap 30 and the risk of separating the insulating component 50 from the electrode terminal 40 are reduced under a condition that the electrode terminal 40 is subjected to a force, so as to improve the safety of the battery cell.

In some embodiments, the end cap 30 is provided with an electrode outlet hole 31. The electrode outlet hole 31 is a via penetrating the end cap 30, so that the electric power in the electrode component 10 is led out from the end cap 30. In an example, the electrode outlet hole 31 penetrates the end cap 30 along a thickness direction Z of the end cap 30.

With reference to Fig. 8, the electrode terminal 40 includes a terminal main body 41 and a first limit portion 42, and at least a part of the terminal main body 41 is located within the electrode outlet hole 31. The terminal main body 41 may be located entirely within the electrode outlet hole 31, or may be located only partially within the electrode outlet hole 31. The electrode outlet hole 31 exposes the terminal main body 41, so that an external structure (such as a bus component) is connected to the terminal main body 41.

In an example, the terminal main body 41 is a columnar structure, and the first limit portion 42 is an annular structure surrounding the outside of the terminal main body 41.

The first limit portion 42 protrudes from an outer sidewall 411 of the terminal main body 41 and is located on a side of the end cap 30 facing the electrode component 10. With reference to Fig. 7 and Fig. 8, the insulating component 50 includes a first insulating portion 51 located on a side of the end cap 30 facing the electrode component 10, and at least a part of the first insulating portion 51 is located between the end cap 30 and the first limit portion 42 and is attached to the end cap 30 and the first limit portion 42, so as to seal the electrode outlet hole 31 and insulate and separate the end cap 30 from the first limit portion 42.

Sealing the electrode outlet hole 31 means that the electrode outlet hole 31 is not connected to an inner space of the housing 20 and/or the electrode outlet hole 31 is not connected to an outer space of the battery cell 7 to prevent the electrode outlet hole 31 from connecting the inner space of the housing 20 to the outer space of the battery cell 7. In the embodiment, the first insulating portion 51 interrupts the connection between the electrode outlet hole 31 and the inner space of the housing 20, so as to seal the electrode outlet hole 31 and prevent the electrolyte leakage through the electrode outlet hole 31.

In the embodiment, the first limit portion 42 is arranged, so that the first limit portion can effectively function as limiting the electrode component 10. The first insulating portion 51 insulates and separates the first limit portion 42 from the end cap 30, and a buffering function of the first insulating portion 51 can reduce a stress and an impact on the end cap 30 and the electrode terminal 40 in the vicinity of the region, and meanwhile, an insulating effect between the first limit portion 42 and the end cap 30 is improved, thereby improving the safety of the battery cell.

The first insulating portion 51 is attached to the end cap 30 and the first limit portion 42 at the same time, so that the electrode terminal 40 may be installed on the end cap 30 in an insulated way and a sealing of the electrode outlet hole 31 can be achieved. Since the first insulating portion 51 is directly connected to the end cap 30 and the first limit portion 42, in the embodiment, the first insulating portion 51 does not need to be compressed, that is, a tightness of a connection interface between the first insulating portion 51 and the end cap 30 and a tightness of a connection interface between the first insulating portion 51 and the first limit portion 42 can be ensured, thereby reducing the pressure on the first insulating portion 51 and reducing the risk of damaging the first insulating portion 51.

In some embodiments, the first insulating portion 51 is an annular structure surrounding an outer side of the terminal main body 41.

In some embodiments, the insulating component 50 further includes a second insulating portion 52, at least a part of the second insulating portion 52 is located within the electrode outlet hole 31 and is located between the terminal main body 41 and the end cap 30, so as to insulate and separate the terminal main body 41 from the end cap 30.

Along a radial direction of the electrode outlet hole 31, the second insulating portion 52 insulates and separates the terminal main body 41 from a hole wall of the electrode outlet hole 31. The second insulating portion 52 may be located entirely within the electrode outlet hole 31, or may be located only partially within the electrode outlet hole 31. In an example, an end portion of the second insulating portion 52 along an axial direction of the electrode outlet hole 31 may be protruded to the outside of the electrode outlet hole 31.

The second insulating portion 52 may be connected to the first insulating portion 51, or may be provided separately from the first insulating portion 51.

In some embodiments, the second insulating portion 52 can further insulate and separate the terminal main body 41 from the end cap 30, so as to reduce a risk of conducting the terminal main body 41 and the end cap 30, and improve the safety.

In some embodiments, the second insulating portion 52 is a cylindrical structure surrounding the outer side of the terminal main body 41.

In some embodiments, the second insulating portion 52 is attached to the terminal main body 41. In an example, the second insulating portion 52 is attached to an outer sidewall 411 of the terminal main body 41.

In the embodiment, the terminal main body 41 may fix the second insulating portion 52 to reduce a risk of dropping of the second insulating portion 52. The second insulating portion 52 is attached to the terminal main body 41, so that a risk of external impurities entering the electrode outlet hole 31 from a gap between the second insulating portion 52 and the terminal main body 41 can be reduced.

In some embodiments, the second insulating portion 52 is attached to the end cap 30. In an example, the second insulating portion 52 is attached to the hole wall of the electrode outlet hole 31.

In the embodiment, the end cap 30 may fix the second insulating portion 52 to reduce the risk of dropping of the second insulating portion 52. The second insulating portion 52 is attached to the end cap 30, so that a risk of external impurities entering the electrode outlet hole 31 from a gap between the second insulating portion 52 and the end cap 30 can be reduced.

In some embodiments, the second insulating portion 52 is attached to the terminal main body 41 and the end cap 30, so that a connection strength between the terminal main body 41 and the end cap 30 can be improved, and the electrode outlet hole 31 can be further sealed, thereby improving the tightness

In some embodiments, the first insulating portion 51 is connected to the second insulating portion 52 such that there is no gap between the first insulating portion 51 and the second insulating portion 52 to ensure insulation and reduce the risk of conduction between the end cap 30 and the electrode terminal 40.

In some embodiments, the second insulating portion 52 extends beyond the end cap 30 along a direction away from the electrode component 10.

Along a thickness direction Z of the end cap 30, the end cap 30 includes an inner surface facing the electrode component 10 and an outer surface away from the electrode component 10, and the second insulating portion 52 includes a first end facing the electrode component 10 and a second end away from the electrode component 10. The second end of the second insulating portion 52 extends beyond the outer surface of the end cap 30 along the direction away from the electrode component 10.

During a process for manufacturing the battery cell 7, external impurities or electrolyte may be splashed onto the end cap 30, and under a condition that the second insulating portion 52 does not extend beyond the end cap 30 along the direction away from the electrode component 10, impurities such as electrolyte may be accumulated on the second insulating portion 52, thereby causing a risk of conduction between the end cap 30 and the terminal main body 41.

In the embodiment, the second insulating portion 52 extends beyond the end cap 30 along the direction away from the electrode component 10, so that a creepage distance between the terminal main body 41 and the end cap 30 can be increased, and meanwhile, a risk of conducting the end cap 30 and the terminal main body 41 by external impurities is reduced, and the safety is improved.

In some embodiments, the terminal main body 41 extends beyond the second insulating portion 52 along the direction away from the electrode component 10.

Along the thickness direction Z of the end cap 30, the terminal main body 41 includes an inner surface facing the electrode component 10 and an outer surface away from the electrode component 10. In an example, the outer surface of the terminal main body 41 extends beyond the second end of the second insulating portion 52 along the direction away from the electrode component 10.

In the embodiment, the terminal main body 41 extends beyond the second insulating portion 52 along the direction away from the electrode component 10, so as to prevent the second insulating portion 52 from interfering with a connection between the terminal main body 41 and other external components such as a bus component.

In some embodiments, the end cap 30, the electrode terminal 40, and the insulating component 50 may be assembled as following steps: I) compositing the first insulating portion 51 to the surface of the end cap 30 by the thermo-compression composite process; II) compositing the second insulating portion 52 to the outer sidewall 411 of the terminal main body 41 of the electrode terminal 40 by the thermo-compression composite process; III) inserting the terminal main body 41 of the electrode terminal 40 into the electrode outlet hole 31, and abutting the first limit portion 42 of the electrode terminal 40 against the first insulating portion 51; IV) connecting the first insulating portion 51 to the first limit portion 42 by the thermo-compression composite process, and integrating the first insulating portion 51 with the second insulating portion 52.

In other embodiments, the end cap 30, the electrode terminal 40, and the insulating component 50 may be assembled as following steps: I) compositing a first insulating layer to the end cap 30 by the thermo-compression composite process, in which the first insulating layer includes a first sub-layer and a second sub-layer, the first sub-layer is composited to a surface of the end cap 30 facing the electrode component 10, the second sub-layer extends to the electrode outlet hole 31, and the second sub-layer is composited to the hole wall of the electrode outlet hole 31; II) compositing a second insulating layer to the electrode terminal 40 by the thermo-compression composite process, in which the second insulating layer includes a third sub-layer and a fourth sub-layer, the third sub-layer is composited to the first limit portion 42, and the second sub-layer is composited to the outer sidewall 411 of the terminal main body 41; III) inserting the terminal main body 41 of the electrode terminal 40 into the electrode outlet hole 31, and abutting the third sub-layer against the first sub-layer, and abutting the fourth sub-layer against the second sub-layer; IV) integrating the first sub-layer with the third sub-layer to form the first insulating portion 51, and integrating the second sub-layer with the fourth sub-layer to form the second insulating portion 52 by the thermo-compression composite process.

In some embodiments, the first insulating portion 51 extends beyond the first limit portion 42 along a direction away from the terminal main body 41 to separate at least a part of the end cap 30 from the electrode component 10.

Along the thickness direction Z of the end cap 30, at least a part of the first insulating portion 51 does not overlap with the first limit portion 42.

In the embodiment, the first insulating portion 51 can separate at least part of the end cap 30 from the electrode component 10, so as to reduce the possibility of contacting the electrode component 10 to the end cap 30 under a condition that the battery cell 7 vibrates, reduce the risk of the short circuit, and improve the safety.

In some embodiments, the end cap 30 includes a cap body 32, a first protruding portion 33 surrounding an outer side of the cap body 32, and an extending portion 34 surrounding an outer side of the first protruding portion 33, and the first protruding portion 33 protrudes from a surface of the cap body 32 facing the electrode component 10 and a surface of the extending portion 34 facing the electrode component 10. The extending portion 34 is configured to be laser welded with the housing 20, and at least a part of the first protruding portion 33 extends into the housing 20 and is configured to block laser for welding when the extending portion 34 and the housing 20 are being welded.

The cap body 32 is a plate-shaped structure, and has an inner surface and an outer surface oppositely arranged along a thickness direction of the cap body 32, the inner surface of the cap body 32 is facing the electrode component 10, and the outer surface of the cap body 32 is away from the electrode component 10.

The first protruding portion 33 is an annular structure surrounding an outer side of the cap body 32. The first protruding portion 33 protrudes along a direction facing the electrode component 10 with respect to the inner surface of the cap body 32, so that at least a part of the first protruding portion 33 protrudes from the inner surface of the cap body 32.

The extending portion 34 is an annular plate-shaped structure surrounding the outer side of the first protruding portion 33, and has an inner surface and an outer surface oppositely arranged along a thickness direction of the extending portion 34. The inner surface of the extending portion 34 is configured to abut against an end surface of the housing 20 surrounding the opening 21, and the laser enters an interface where the inner surface of the extending portion 34 intersects with an end surface of the housing 20.

Under a condition that the laser is used for welding, the laser is applied at a position where the extending portion 34 is abutted against the housing 20 to weld the extending portion 34 to the housing 20. Due to a fit error, there may be minute gaps at the position where the housing 20 is abutted against the extending portion 34, and the laser may easily pass through the gaps and enter the inside of the housing 20, thereby causing a risk of burning other components (such as the electrode component 10) within the housing 20. The first protruding portion 33 protrudes from the surface of the extending portion 34 facing the electrode component 10, and therefore, under a condition that the laser enters the housing 20 from the gaps at an abutted position, the first protruding portion 33 can block the laser, so that the risk of burning of other components by the laser is reduced.

In some embodiments, the insulating component 50 at least partially covers a top end surface 331 of the first protruding portion 33, so as to insulate and separate the first protruding portion 33 from the electrode component 10.

The first protruding portion 33 protrudes from the cap body 32, so a distance between the top end surface 331 of the first protruding portion 33 and the electrode component 10 is less; under a condition that the battery cell 7 vibrates, a risk of contacting the first protruding portion 33 to the electrode component 10 is higher. In the embodiments of the present application, the insulating component 50 at least partially covers the top end surface 331 of the first protruding portion 33, and it is preferred that the insulating component 50 completely covers the top end surface 331 of the first protruding portion 33, so as to reduce a risk of contacting the electrode component 10 to the first protruding portion 33, thereby improving the safety.

In some embodiments, the insulating component 50 includes a first insulating portion 51 located on a side of the end cap 30 facing the electrode component 10. With reference to Fig. 8, the first insulating portion 51 includes a first portion 511, a second portion 512, and a third portion 513, and the first portion 511 is attached to the cap body 32, at least a part of the first portion 511 is located between the cap body 32 and the electrode terminal 40, the third portion 513 is attached to the top end surface 331 of the first protruding portion 33, and the second portion 512 is connected between the first portion 511 and the third portion 513 and is attached to a side surface 332 of the first protruding portion 33 close to the cap body32.

In the embodiment, a shape of the end cap 30 and a shape of the first insulating portion 51 can be ensured to correspond to each other in a region where the end cap 30 contacts to the first insulating portion 51, so as to improve a separation and insulation effect of the first insulating portion 51 in the region as much as possible, thereby further reducing a risk of contacting the end cap 30 to the electrode component 10.

In some embodiments, the end cap 30 is formed with a first recess 35 at a position corresponding to the first protruding portion 33, and the first recess 35 is recessed relative to a surface of the cap body 32 away from the electrode component 10.

Welding stress is generated when the extending portion 34 is welded to the housing 20, and is transmitted to the first protruding portion 33. In the embodiment, the first recess 35 is formed on a side of the first protruding portion 33 away from the electrode component 10, so as to reduce a strength of the first protruding portion 33, so that the first protruding portion 33 can release the welding stress by deforming during the welding process, thereby reducing a risk of deformation and cracking of a welded region, and improving a sealing and performance.

In some embodiments, the insulating component 50 has a thickness ranging from 0.05mm to 1.5mm.

In an example, the insulating component 50 has a thickness of 0.05mm, 0.1mm, 0.2mm, 0.5mm, 0.8mm, 1mm, 1.2mm, or 1.5mm.

In the embodiment, the insulating component 50 is not easily damaged, and may have a less thickness, so that a space occupied by the insulating component 50 may be reduced and an energy density of the battery cells 7 may be increased.

Fig. 9 is an enlarged schematic view of the portion of the battery cell at a block D shown in Fig. 7; Fig. 10 is a schematic cross-sectional view of an electrode terminal of a battery cell according to some embodiments of the present application.

As shown in Fig. 9 and Fig. 10, in some embodiments, the electrode component 10 includes a main body portion 11 and a first electrode tab 12 led out from an end of the main body portion 11 facing the end cap 30. The electrode terminal 40 is provided with a second recess 43 recessed from a surface of the electrode terminal 40 away from the electrode component 10. The electrode terminal 40 is formed with a connecting portion 44 at a bottom of the second recess 43, and the connecting portion 44 is configured to be welded to the first electrode tab 12 to form a first welded portion W1.

The electrode component 10 is a component where electrochemical reaction occurs in the battery cells 7. The electrode component 10 may include the main body portion 11, the first electrode tab 12 and a second electrode tab (not shown), polarities of the first electrode tab 12 and the second electrode tab are opposite, and each protrudes from the main body portion 11 along the thickness direction Z. The first electrode tab 12 and the second electrode tab may be provided on a same side of the main body portion 11, or may be provided on two different sides of the main body portion 11, respectively.

One of the first electrode tab 12 and the second electrode tab is a positive electrode tab, and the other of the first electrode tab 12 and the second electrode tab is a negative tab.

The main body portion 11 may include a part of the positive electrode plate coated with the active material layer, a part of the negative electrode plate coated with the active material layer, and the separator. The main body portion 11 may be a part of the electrode component 10 corresponding to regions of the electrode plates coated with the active material layer, the positive electrode tab may be a part of the positive electrode plate uncoated with the active material layer, and the negative electrode tab may be a part of the negative electrode plate uncoated with the active material layer.

In the embodiments of the present application, the connecting portion 44 may be welded to the first electrode tab 12 from the outside, so that a risk of metal particles generated by welding splashing into the housing 20 may be reduced, and the safety may be improved In the embodiment, a thickness of the connecting portion 44 is reduced by providing the second recess 43, so that welding power required to weld the connecting portion 44 to the first electrode tab 12 can be reduced, thereby reducing heat generation and a risk of burning the insulating component 50.

In some embodiments, the second recess 43 is formed on the terminal main body 41, and the connecting portion 44 is a part of the terminal main body 41.

In some embodiments, the first electrode tab 12 and the second electrode tab are located on two different ends of the main body portion 11, respectively.

In some embodiments, the connecting portion 44 is provided with a first via 441 configured to connect the second recess 43 to an inner space of the housing. The battery cell 7 further includes a sealing plate 60, and at least part of the sealing plate 60 is accommodated within the second recess 43 and is connected to the electrode terminal 40, so as to seal the first via 441.

The first via 441 may have a function of releasing the welding stress under a condition that the connecting portion 44 is welded to the first electrode tab 12, thereby reducing a risk of bursting of the connecting portion 44.

In a process for manufacturing the battery cell 7, the first via 441 may be used in a plurality of manufacturing processes. For example, the first via 441 may be applied to the liquid injection process, a chemical formation process, or other processes.

Specifically, the first via 441 is used to inject the electrolyte into the inner space of the housing. Under a condition that the liquid is required to be injected, a liquid injection head of a liquid injection device is pressed against the connecting portion 44, and then the liquid injection head is used to inject the electrolyte into the housing through the first via 441. In the chemical formation process of the battery cell 7, gas is generated in the housing, and the first via 441 may also be configured to be connected with an external negative pressure device to extract the gas in the housing.

After the processes such as the liquid injection process is completed, the sealing plate 60 is installed to the electrode terminal 40, so as to seal the first via 441, thereby reducing the risk of electrolyte leakage.

In some embodiments, the sealing plate 60 is welded to the electrode terminal 40.

In some embodiments, a sealing plate 60 may be configured be connected with the bus component to conduct charges on the electrode terminal 40 to the bus component.

In some embodiments, the electrode component 10 is a winding structure and includes a second via 13 at a winding center of the winding structure, and the second via 13 penetrates the first electrode tab 12 and the main body portion 11 along an axial direction of the electrode component 10. The first via 441 and the second via 13 are oppositely arranged along the axial direction.

The electrode component 10 is made by winding the first electrode plate, the second electrode plate and the separator on a winding tool. After the electrode component 10 is shaped by winding, the winding tool is pulled out from the electrode component 10. After the winding tool is pulled out, the second via 13 is formed in the middle of the electrode component 10.

The winding axis of the electrode component 10 is parallel to the axial direction. In an example, the axial direction is parallel to the thickness direction Z of the end cap 30.

Along the axial direction, the first via 441 at least partially overlaps with the second via 13. In an example, a projection of the first via 441 along the axial direction is located within a projection of the second via 13 along the axial direction.

In the liquid injection process, the electrolyte can flow into the second via 13 through the first via 441, and the electrolyte flowing into the second via 13 can wet the electrode component 10 from inside, so as to improve efficiency of wetting the electrode component 10.

In some embodiments, the electrode terminal 40 includes a second protruding portion 45 arranged around the first via 441 and protruding from a surface of the connecting portion 44 facing the first electrode tab 12. At least a part of the second protruding portion 45 protrudes into the second via 13.

In the embodiment, the part of the second protruding portion 45 extending into the second via 13 can support the first electrode tab 12, so as to reduce deformation of the first electrode tab 12 toward the second via 13, thereby reducing a risk of inserting the first electrode tab 12 into the main body portion 11 via the second via 13, and improving the safety. The second protruding portion 45 can also separate the first electrode tab 12 from the electrolyte in the injection process, thereby reducing a risk of impacting the first electrode tab 12 by the electrolyte, and reducing deformation of the first electrode tab 12.

Fig. 11 is a schematic structural view of an electrode terminal according to some embodiments of the present application; Fig. 12 is a top view of an electrode component according to some embodiments of the present application.

With reference to Fig. 9 to Fig. 12, in some embodiments, the first electrode tab 12 is wound around a winding axis of the electrode component 10 and includes a plurality of electrode tab layers 121. At least a part of the plurality of electrode tab layers 121 are welded to form a second welded portion W2. Along the thickness direction Z of the end cap 30, at least a part of the second welded portion W2 does not overlap with the connecting portion 44.

The first electrode tab 12 is wound around the winding axis of the electrode component 10, and the first electrode tab 12 is generally a cylindrical shape. Two ends of the first electrode tab 12 along a winding direction X are an inner end and an outer end, respectively, and, in the embodiment, the electrode tab layers 121 are divided based on the inner end of the first electrode tab 12. The winding direction X is perpendicular to the winding axis.

In an example, the inner end of the first electrode tab 12 is a head end of a first electrode tab layer 121, a rear end of the first electrode tab layer 121 is aligned with the head end of the first electrode tab layer 121 along the radial direction of the first electrode tab 12, and the first electrode tab layer 121 is wound once around the winding axis. Correspondingly, the rear end of the first electrode tab layer 121 is a head end of a second electrode tab layer 121, and similarly, N electrode tab layers 121 are connected end to end along the winding direction X, and N is greater than or equal to 2. In dividing the electrode tab layers 121, a head end of each electrode tab layer 121 is aligned with the inner end of the first electrode tab 12 along a radial direction of the first electrode tab 12. The radial direction of the first electrode tab 12 is perpendicular to and passes through the winding axis. In an example, the inner end and the outer end of the first electrode tab 12 are aligned along the radial direction of the first electrode tab 12, so that each of the electrode tab layers 121 is wound once around the winding axis. Of course, alternatively, the first electrode tab 12 may have a portion at its rear, the portion is wound less than once around the winding axis, for example, the portion may be wound 1/4 round, 1/2 round, 2/3 round, or 3/4 round around the winding axis.

After the winding is completed, the first electrode tab 12 is generally a cylindrical shape, and a gap is left between two adjacent electrode tab layers 121. In the embodiments of the present application, the first electrode tab 12 may be processed to reduce the gap between the electrode tab layers 121, so as to facilitate the connection between the first electrode tab 12 and the electrode terminal 40. For example, in the embodiments of the present application, a flattening treatment may be performed to the first electrode tab 12, so that an end region of the first electrode tab 12 away from the main body portion 11 is gathered and brought together. The flattening treatment is to shape an end region of the first electrode tab 12 away from the main body portion 11 by a flattening apparatus, so as to compact the end region of the first electrode tab 12 and form a dense end surface, reduce a gap between the electrode tab layers 121, thereby facilitating the welding of the first electrode tab 12 to the electrode terminal 40.

Limited by a size of the electrode terminal, a relatively limited number of electrode tab layers are directly welded to the connecting portion, this causes a longer conducting path between the electrode tab layer that is not welded to the connecting portion and the connecting portion, a large resistance of the electrode component, an uneven current density, a risk of polarization of the electrode plate, thereby affecting the conveyance capacity and the charging efficiency of the battery cell.

In the embodiment, some of the electrode tab layers 121 directly welded to the connecting portion 44 cannot be connected to each other by the second welded portion W2, so that a conducting path between the electrode tab layers 121 and a conducting path between the electrode tab layer 121 and the connecting portion 44 can be shortened, resistance of the electrode component 10 is reduced, a uniformity of a current density is improved, a risk of the polarization of the electrode plate is reduced, and the conveyance capacity and the charging efficiency of the battery cell 7 are improved.

In a process for assembling the battery cell 7, the first electrode tab 12 of the electrode component 10 is first welded to form the second welded portion W2, then the electrode component 10 is put into the housing 20, next the electrode terminal 40 is welded to the first electrode tab 12 to form the first welded portion W1.

In some embodiments, the second welded portion W2 is connected to the first welded portion W1.

Under a condition that the electrode terminal 40 is welded to the first electrode tab 12, a part of the second welded portion W2 is melted and is connected to the electrode terminal 40, so that the formed second welded portion W2 intersects with and is directly connected to the formed first welded portion W1.

In the embodiment, the first welded portion W1 is directly connected to the second welded portion W2, so that currents collected by the second welded portion W2 can directly flow into the first welded portion W1, thereby further shortening a conducting path between the first welded portion W1 and the second welded portion W2, reducing the resistance, and improving the conveyance capacity and the charging efficiency of the battery cell 7.

In some embodiments, the second welded portion W2 extends along a radial direction of the electrode component 10, and the radial direction is perpendicular to the winding axis of the electrode component 10.

In the embodiment, the second welded portion W2 extending along the radial direction may be connected to more electrode tab layers 121, so as to reduce a difference in conducting paths between the electrode tab layers 121.

In some embodiments, there are a plurality of second welded portions W2, and the plurality of second welded portions W2 are spaced apart along a circumferential direction of the electrode component 10.

In the embodiment, the plurality of second welded portions W2 may increase a conveyance area, thereby improving the conveyance capacity and the charging efficiency of the battery cell 7.

Fig. 13 is a partial cross-sectional schematic view of a battery cell according to some other embodiments of the present application; Fig. 14 is an enlarged schematic view of a portion of the battery cell at a circle E shown in Fig. 13.

As shown in Fig. 13 and Fig. 14, in some embodiments, the electrode terminal 40 further includes a second limit portion 46 protruding from an outer sidewall of the terminal main body 41 and located on a side of the end cap 30 away from the electrode component 10. The insulating component 50 further includes a third insulating portion 53 arranged around the terminal main body 41 and located between the second limit portion 46 and the end cap 30, so as to insulate and separate the second limit portion 46 from the end cap 30.

The third insulating portion 53 may be connected to the second insulating portion 52 or may be provided separately from the second insulating portion 52. In an example, the first insulating portion 51, the second insulating portion 52, and the third insulating portion 53 are integrally formed structures.

Along the thickness direction Z of the end cap 30, the first limit portion 42 and the second limit portion 46 sandwich a part of the end cap 30 from two sides. In the embodiment, a connection strength between the electrode terminal 40 and the end cap 30 can be increased by providing the second limit portion 46, so that the stability is improved; the third insulating portion 53 can insulate and separate the second limit portion 46 from the end cap 30, so as to further reduce the risk of the short circuit.

In the embodiment, the third insulating portion 53 may be located entirely between the second limit portion 46 and the end cap 30, or may be located only partially between the second limit portion 46 and the end cap 30.

In some embodiments, the third insulating portion 53 is attached to the end cap 30, so that a tightness of a connection surface between the third insulating portion 53 and the end cap 30 can be increased.

In some embodiments, the third insulating portion 53 is connected to the second insulating portion 52 such that there is no gap between the third insulating portion 53 and the second insulating portion 52 to ensure insulation and reduce the risk of conduction between the end cap 30 and the electrode terminal 40.

Fig. 15 is a schematic flowchart of a method for manufacturing a battery cell according to some embodiments of the present application

As shown in Fig. 15, the method for manufacturing the battery cell according to the embodiments of the present application includes:

S100, providing a housing having an opening;

S200, providing an electrode component and installing the electrode component within the housing;

S300, providing an end cap, an electrode component, and an insulating component, and the electrode terminal is disposed on the end cap, the insulating component insulates and separates the end cap from the electrode terminal, and at least a part of the insulating component is located between the end cap and the electrode terminal and is attached to the end cap and the electrode terminal;

S400, covering the opening with the end cap, and electrically connecting the electrode terminal to the electrode component.

It should be noted that, for the structure of the battery cell manufactured by the above method, reference may be made to the battery cell provided in the above embodiments.

Under a condition that the battery cell is assembled according to the above method, it is not necessary to carry out the steps in the above order, that is, the steps may be carried out in an order mentioned in the embodiments, or in an order different from that mentioned in the embodiments, or several steps may be performed simultaneously. For example, the execution of steps S100 and S300 is in no particular order, and may also be performed simultaneously.

Fig. 16 is a schematic block diagram of a system for manufacturing a battery cell according to some embodiments of the present application.

As shown in Fig. 16, a system 90 for manufacturing a battery cell according to the embodiments of the present application includes a first providing apparatus 91, a second providing apparatus 92, a third providing apparatus 93, and an assembling apparatus 94. The first providing apparatus 91 is configured to provide a housing having an opening. The second providing apparatus 92 is configured to provide an electrode component and install the electrode component within the housing. The third providing apparatus 93 is configured to provide an end cap, an electrode component, and an insulating component, the electrode terminal is disposed on the end cap, the insulating component insulates and separates the end cap from the electrode terminal, and at least a part of the insulating component is located between the end cap and the electrode terminal and is attached to the end cap and the electrode terminal. The assembling apparatus 94 is configured to cover the opening with the end cap and electrically connect the electrode terminal to the electrode component.

For a related structure of a battery cell manufactured by the above system for manufacturing a battery cell, reference may be made to the battery cell provided in the above embodiments.

It should be noted that the embodiments in the present application and the features of the embodiments may be combined with each other in the case of no conflict.

Finally it should be noted that: the above embodiments are only for illustrating technical solutions of the present application, rather than for limiting; although the present application has been described in detail with reference to the foregoing embodiments, those of ordinary skill in the art should understand: it is still possible to modify the technical solutions recited in the foregoing embodiments, or perform equivalent replacements to some of the technical features thereof, however, these modifications or replacements do not make an essence of the corresponding technical solutions deviate from the spirit and scope of the technical solutions of the embodiments of the present application.

## Claims

1. A battery cell, comprising:
a housing having an opening;
an electrode component accommodated within the housing;
an end cap configured to cover the opening;
an electrode terminal disposed on the end cap and electrically connected to the electrode component; and
an insulating component configured to insulate and separate the end cap from the electrode terminal, wherein at least a part of the insulating component is located between the end cap and the electrode terminal and is attached to the end cap and the electrode terminal.

2. The battery cell according to claim 1, wherein the insulating component is tightly coupled with the end cap and the electrode terminal.

3. The battery cell according to claim 2, wherein the insulating component is tightly coupled with the end cap and the electrode terminal through a thermo-compression composite process.

4. The battery cell according to claim 2 or 3, wherein the insulating component is tightly coupled with the end cap and the electrode terminal by a microscopic fitting structure.

5. The battery cell according to any of claims 1 to 4, wherein the end cap is provided with an electrode outlet hole;
the electrode terminal comprises a terminal main body and a first limit portion, at least a part of the terminal main body is located within the electrode outlet hole, and the first limit portion protrudes from an outer sidewall of the terminal main body and is located on a side of the end cap facing the electrode component; and
the insulating component comprises a first insulating portion located on a side of the end cap facing the electrode component, and at least a part of the first insulating portion is located between the end cap and the first limit portion and is attached to the end cap and the first limit portion, so as to seal the electrode outlet hole.

6. The battery cell according to claim 5, wherein the insulating component further comprises a second insulating portion, at least a part of the second insulating portion is located within the electrode outlet hole and is located between the terminal main body and the end cap, so as to insulate and separate the terminal main body from the end cap.

7. The battery cell according to claim 6, wherein the second insulating portion is attached to the terminal main body; and/or
the second insulating portion is attached to the end cap.

8. The battery cell according to claim 6 or 7, wherein the first insulating portion is connected to the second insulating portion.

9. The battery cell according to any of claims 6 to 8, wherein the second insulating portion extends beyond the end cap along a direction away from the electrode component.

10. The battery cell according to any of claims 6 to 9, wherein the terminal main body extends beyond the second insulating portion along a direction away from the electrode component.

11. The battery cell according to any of claims 6 to 10, wherein the electrode terminal further comprises a second limit portion protruding from an outer sidewall of the terminal main body and located on a side of the end cap away from the electrode component; and
the insulating component further comprises a third insulating portion arranged around the terminal main body and located between the second limit portion and the end cap, so as to insulate and separate the second limit portion from the end cap.

12. The battery cell according to claim 11, wherein the third insulating portion is attached to the end cap.

13. The battery cell according to claim 11 or 12, wherein the third insulating portion is connected to the second insulating portion.

14. The battery cell according to any of claims 5 to 13, wherein the first insulating portion extends beyond the first limit portion along a direction away from the terminal main body to separate at least a part of the end cap from the electrode component.

15. The battery cell according to any of claims 1 to 14, wherein the end cap comprises a cap body, a first protruding portion surrounding an outer side of the cap body, and an extending portion surrounding an outer side of the first protruding portion, wherein the first protruding portion protrudes from a surface of the cap body facing the electrode component and a surface of the extending portion facing the electrode component; and
the extending portion is configured to be laser welded with the housing, and at least a part of the first protruding portion extends into the housing and is configured to block laser for welding when the extending portion and the housing are being welded.

16. The battery cell according to claim 15, wherein the insulating component at least partially covers a top end surface of the first protruding portion, so as to insulate and separate the first protruding portion from the electrode component.

17. The battery cell according to claim 16, wherein the insulating component comprises a first insulating portion located on a side of the end cap facing the electrode component; and
the first insulating portion comprises a first portion, a second portion, and a third portion, wherein the first portion is attached to the cap body, at least a part of the first portion is located between the cap body and the electrode terminal, the third portion is attached to the top end surface of the first protruding portion, and the second portion is connected between the first portion and the third portion and is attached to a side surface of the first protruding portion close to the cap body.

18. The battery cell according to any of claims 15 to 17, wherein the end cap is formed with a first recess at a position corresponding to the first protruding portion, and the first recess is recessed relative to a surface of the cap body away from the electrode component.

19. The battery cell according to any of claims 1 to 18, wherein the electrode component comprises a main body portion and a first electrode tab led out from an end of the main body portion facing the end cap;
the electrode terminal is provided with a second recess recessed from a surface of the electrode terminal away from the electrode component; and
the electrode terminal is formed with a connecting portion at a bottom of the second recess, and the connecting portion is configured to be welded to the first electrode tab to form a first welded portion.

20. The battery cell according to claim 19, wherein the connecting portion is provided with a first via configured to connect the second recess to an inner space of the housing; and
the battery cell further comprises a sealing plate, and at least a part of the sealing plate is accommodated within the second recess and is connected to the electrode terminal, so as to seal the first via.

21. The battery cell according to claim 20, wherein the electrode component is a winding structure and comprises a second via at a winding center of the winding structure, and the second via penetrates the first electrode tab and the main body portion along an axial direction of the electrode component; and
the first via and the second via are oppositely arranged along the axial direction.

22. The battery cell according to claim 21, wherein the electrode terminal comprises a second protruding portion arranged around the first via and protruding from a surface of the connecting portion facing the first electrode tab; and
at least a part of the second protruding portion extends into the second via.

23. The battery cell according to any of claims 19 to 22, wherein the first electrode tab is wound around a winding axis of the electrode component and comprises a plurality of electrode tab layers;
at least a part of the plurality of electrode tab layers are welded to form a second welded portion; and
along a thickness direction of the end cap, at least a part of the second welded portion does not overlap with the connecting portion.

24. The battery cell according to claim 23, wherein the second welded portion is connected to the first welded portion.

25. The battery cell according to claim 23 or 24, wherein the second welded portion extends along a radial direction of the electrode component, and the radial direction is perpendicular to the winding axis of the electrode component.

26. The battery cell according to any of claims 23 to 25, wherein there are a plurality of second welded portions, and the plurality of second welded portions are spaced apart along a circumferential direction of the electrode component.

27. The battery cell according to any of claims 1 to 26, wherein the insulating component has a thickness ranging from 0.05mm to 1.5mm.

28. A battery comprising a plurality of battery cells according to any of claims 1 to 27.

29. An electrical apparatus comprising the battery cell according to any of claims 1 to 27, wherein the battery cell is configured to provide electrical power.

30. A method for manufacturing a battery cell, comprising:
providing a housing having an opening;
providing an electrode component and installing the electrode component within the housing;
providing an end cap, an electrode component, and an insulating component, wherein the electrode terminal is disposed on the end cap, the insulating component insulates and separates the end cap from the electrode terminal, and at least a part of the insulating component is located between the end cap and the electrode terminal and is attached to the end cap and the electrode terminal; and
covering the opening with the end cap, and electrically connecting the electrode terminal to the electrode component.

31. A system for manufacturing a battery cell, comprising:
a first providing apparatus configured to provide a housing having an opening;
a second providing apparatus configured to provide an electrode component and install the electrode component within the housing;
a third providing apparatus configured to provide an end cap, an electrode component, and an insulating component, wherein the electrode terminal is disposed on the end cap, the insulating component insulates and separates the end cap from the electrode terminal, and at least a part of the insulating component is located between the end cap and the electrode terminal and is attached to the end cap and the electrode terminal; and
an assembling apparatus configured to cover the opening with the end cap and electrically connect the electrode terminal to the electrod
